# EUROPEAN PATENT APPLICATION

(11) **EP 3 951 779 A1**
(43) Date of publication of application: **09.02.2022**
(21) Application number: 20783050.6
(22) Date of filing: 24.03.2020
(51) Int. Cl.: G10L 25/51

(54) **METHOD FOR ENHANCING FAR-FIELD SPEECH RECOGNITION RATE, SYSTEM AND READABLE STORAGE MEDIUM**

(30) Priority: 02.04.2019 CN 201910262894
(71) Applicant: Shenzhen TCL New Technology Co., Ltd, Shenzhen, Guangdong 518052 (CN)
(72) Inventor: CHEN, Wenjie, Shenzhen, Guangdong 518052 (CN)
(74) Representative: Murgitroyd & Company
(86) International application number: PCT/CN2020/080826
(87) International publication number: WO 2020/199971

(57) **Abstract**

A method for enhancing a far-field speech recognition rate, a system and a storage medium. An intelligent television scanning directly in front of said intelligent television so as to obtain position information, movement information and feature information for an object directly in front of same; detecting and positioning the location of a sound source which has emitted an activation word, and using the obtained feature information for judging whether the sound source is a human (S200); if the sound source is a human, then using a MIC array for forming a narrow sound-pickup beam directed at the sound source, and carrying out sound pickup; using the sound-pickup beam, and in accordance with sound source position parameters, adjusting an angle in real-time so as to track the sound source, thus ensuring the stability of sound pickup. Compared to the prior art, wherein it is difficult to distinguish between an interference source and a target sound source, positioning is imprecise and there is no way to perform sound pickup when a target sound source is moving, it is possible to preform precise positioning and distinguish an interference source from a target sound source, and it is possible to track a target sound source, thus enhancing a far-field speech recognition rate.

## Description

### PRIORITY

This PCT patent application claims the priority of Chinese Application No. 201910262894.4, filed on April 2, 2019. This patent application incorporates technical solutions of above patents.

### TECHNICAL FIELD

The present disclosure relates to smart television technologies, and more particularly to a method, system and readable storage medium for enhancing far-field speech recognition rate.

### DESCRIPTION OF RELATED ARTS

With the development of smart television technologies, AI has gradually become a standard feature of TV products, and realization of voice interaction has become a development trend of AI smart TVs. Many AI smart TVs currently on the market support voice interaction. So-called far-field voice, as the name suggests, means that at a far place (e.g., 5 meters away), smart devices such as AI smart TVs can also hear clearly and understand user voice commands. It is an innovative interactive function that fuses with AI voice search and changes user experience. In far-field voice interaction, how to easily wake up and control smart TV devices with voice in a complicated living room environment has become an extremely important issue for user experience. Far-field speech recognition is realized with a need of a combination of front and back ends. At the front end, a microphone array is used to carry out voice enhancement and far-field sound pickup through sound source positioning and adaptive beam forming, and it need to be solved the affection of noise, reverberation, echo and etc. At the back end, that is, a background recognition engine, by a complicated combination of software and hardware, it enables far-field speech to realize human-computer interaction and allows a user to realize a "conversation" with smart TVs at a distance. In a case of multiple sound sources, current smart-TV far-field voice technologies usually employ sound source positing, beam forming, blind source separating and etc. in order to avoid interferences with other sound sources so as to effectively pick out the sound from a target sound source. For example, in the sound source positioning technology, a system cannot distinguish the target sound source from interfering sources when the sound from the interfering sources and the target sound source is propagated along a same direction. In addition, the angle of beam forming is fixed after the sound source is located as being in a certain direction. If the target sound source is moving, the target sound source may move out of an area that is originally located, resulting an inability to effectively pick up the sound. As for the blind source separating technology, the target source and the interfering sources are determined mainly by sound pressure; however, the sound from the target sound source may be louder than or may be quieter than the sound from the interfering sources such that it cannot accurately distinguish the target source from the interfering sources. Above all, because of limitations of current existing technologies, a use of far-field voice is not quite ideal under certain conditions, leading to poor user experience.

Therefore, the existing art is needed to be improved and development is required.

### SUMMARY

In view of the drawbacks of the existing art, the present disclosure provides a method for enhancing far-field speech recognition rate in order to improve the drawbacks and disadvantages of the existing art. By fusing radar positioning and Direction of Arrival (DOA) technologies into a smart television, various sound source information is collected, processed and determined, precise positioning is performed and a target sound source is distinguished from interfering sources, a sound-pickup beam with a small angle is formed by incorporating a built-in far-field-voice beam forming function, the sound-pickup beam points only at the target sound source and picks up only the sound of the target sound source. In such a way the purpose of precise sound pickup is achieved. Because of real-time radar positioning, an angle adjustment is performed in real-time on the beam to track and pick up the sound of the target sound source, thereby solving the problem of inability to perform the sound pickup during the position of the target sound source is changing.

Technical solutions provided by the present disclosure to solve the technical problem are described below.

A method for enhancing far-field speech recognition rate includes the steps of:

scanning a space directly at a front side of a smart television in real-time to obtain position information, movement information and feature information of an object directly at the front side of the smart television;

detecting and locating a position of a sound source sending out a trigger phrase and determining whether the sound source is human based on the obtained feature information;

responsive to that the sound source is determined to be human, forming a sound-pickup beam pointing at the sound source for performing sound pickup; and

tracking the sound source to perform the sound pickup by using the sound-pickup beam.

As a further improved technical solution, the scanning the space directly at the front side of the smart television in real-time to obtain the position information, the movement information and the feature information of the object directly at the front side of the smart television includes obtaining the position information, the movement information and the feature information of all the objects directly at the front side of the smart television by scanning all the objects directly at the front side of the smart television in real-time by means of a radar positioning function and employing a fact that different features are possessed for different objects.

As a further improved technical solution, the detecting and locating the position of the sound source sending out the trigger phrase and the determining whether the sound source is human based on the obtained feature information include the steps of:

responsive to that a plurality of sound sources exist directly at the front side of the smart television, by means of Direction of Arrival (DOA), detecting a direction of the sound source which is the first to send out the trigger phrase;

locating the position of the sound source of the trigger phrase; and

determining whether the located sound source is human based on the feature information obtained by a radar; if not, performing the detecting and determining once again.

As a further improved technical solution, responsive to that the plurality of sound sources exist directly at the front side of the smart television, by means of Direction of Arrival (DOA), detecting the direction of the sound source which is the first to send out the trigger phrase includes:

controlling a far-field speech recognition system in the smart television to detect human voice sources only.

As a further improved technical solution, responsive to that the sound source is determined to be human, the forming the sound-pickup beam pointing at the sound source for performing sound pickup includes the steps of:

responsive to that the sound source is determined to be human, setting the sound source which is the first to send out the trigger phrase, as a target sound source; and

employing, by a smart television system, a beam forming function to form a sound-pickup beam pointing at the target sound source by means of a microphone array and performing sound pickup on the sound source.

As a further improved technical solution, the sound-pickup beam pointing at the sound source is a narrow sound-pickup beam, which is employed for making the pointing of the sound-pickup beam accurate.

As a further improved technical solution, the tracking the sound source to perform the sound pickup by using the sound-pickup beam includes the step of:

locating the position of the sound source in real-time by the radar to obtain position data of the sound source; and

performing an angle adjustment on the sound-pickup beam in real-time based on the obtained position data until a control over the smart television is completed or a recognition state is quit.

The present disclosure further provides a system for enhancing far-field speech recognition rate, including a positioning module, a sound source locating and sound source class identifying module, a sound pickup module and a sound-pickup beam tracking module;

the radar positioning module configured for scanning a space directly at a front side of a smart television in real-time to obtain position information, movement information and feature information of an object directly at the front side of the smart television;

the sound source locating and sound source class identifying module configured for detecting and locating a position of a sound source sending out a trigger phrase and determining whether the sound source is human;

the sound pickup module configured for picking up a sound from the sound source;

the sound-pickup beam tracking module configured for tracking the sound source by using a sound-pickup beam, based on obtained real-time locating of the sound source.

As a further improved technical solution, the positioning module obtains the position information, the movement information and the feature information of all the objects directly at the front side of the smart television by scanning all the objects directly at the front side of the smart television in real-time by means of a radar positioning function and employing a fact that different features are possessed for different objects.

As a further improved technical solution, the sound source locating and sound source class identifying module is configured for detecting and locating the position of the sound source sending out the trigger phrase and determining whether the sound source is human, and responsive to that a plurality of sound sources exist directly at the front side of the smart television, by recognizing the trigger phrase and by means of Direction of Arrival (DOA), detecting a direction of the sound source which is the first to send out the trigger phrase to locate the position of the sound source, and the smart television determines whether the located sound source is human based on the feature information obtained by radar scanning; if not, the detecting and determining is performed once again.

As a further improved technical solution, the sound source locating and sound source class identifying module is further configured for controlling a far-field speech recognition system in the smart television to detect human voice sources only. As a further improved technical solution, the sound pickup module is configured for picking up the sound of the sound source, if the sound source is identified as human by the sound source locating and sound source class identifying module, the sound source which is the first to send out the trigger phrase is set as a target sound source, and a smart television system employs a beam forming function to form a sound-pickup beam pointing at the target sound source by means of a microphone array and perform sound pickup on the sound source.

As a further improved technical solution, the sound-pickup beam pointing at the sound source is a narrow sound-pickup beam, which is employed for making the pointing of the sound-pickup beam accurate.

As a further improved technical solution, the sound-pickup beam tracking module is configured for tracking the sound source by using the sound-pickup beam, based on real-time locating of the sound source obtained by a radar, and performing an angle adjustment on the sound-pickup beam in real-time to track and pick up the sound of the sound source until a control over the smart television is completed or a recognition state is quit.

The present disclosure further provides a readable storage medium, which stores a program for enhancing far-field speech recognition rate. The program for enhancing far-field speech recognition rate implements, when executed by a processor, the steps of the afore-described method for enhancing far-field speech recognition rate.

Compared to the existing art in which it is difficult to distinguish the sound from a target sound source and interfering sources, positioning is imprecise, and there is no way to perform sound pickup when the target sound source is moving, the present disclosure employs positioning and detecting technologies to collect, process and determine various sound source information, and it is thus possible to perform precise positioning and distinguish the target sound source from the interfering sources and it is possible to track and pick up the sound of the target sound source by performing a beam angle adjustment in real-time, thereby enhancing sound-pickup effect. It greatly improves far-field speech recognition rate in complicated environments as compared to the existing art.

### BRIEF DESCRIPTION OF THE DRAWINGS

Embodiments of the present disclosure will be described in detail below in conjunction with figures, in which:
FIG. 1 is a flowchart of a method for enhancing far-field speech recognition rate in accordance with a preferred embodiment of the present disclosure.
FIG. 2 is a block diagram illustrating a system for enhancing far-field speech recognition rate in accordance with a preferred embodiment of the present disclosure.
FIG. 3 is a diagram illustrating a signal processing flow of a method for enhancing far-field speech recognition rate in accordance with a preferred embodiment of the present disclosure.

### DETAILED DESCRIPTION

To make the objectives, technical schemes, and effects of the present disclosure more clear and specific, the present disclosure is described in further detail below with reference to the embodiments in accompanying with the appending drawings. It should be understood that the specific embodiments described herein are merely for interpreting the present disclosure and the present disclosure is not limited thereto.

In the case of multiple sound sources, current smart-television (smart-TV) far-field voice technologies usually employ sound source positing, beam forming, blind source separating and etc. in order to avoid interferences with other sound sources so as to effectively pick out the sound from a target sound source. However, in the sound source positioning technology, the target sound source cannot be distinguished from interfering sources when the sound from the interfering sources and the target sound source is propagated along a same direction. In addition, the angle of beam forming is fixed after the sound source is located as being in a certain direction. If the target sound source is moving, it may appear that the target sound source moves out of an area that is originally located, resulting an inability to effectively pick up the sound. As for the blind source separating technology, the target source and the interfering sources are determined mainly by sound pressure; however, the sound from the target sound source may be louder than or may be quieter than the sound from the interfering sources such that it cannot accurately distinguish the target source from the interfering sources. In brief, because of limitations of current existing technologies, a use of far-field voice is not quite ideal under certain conditions, leading to poor user experience.

In view of above drawbacks of the existing art, the present disclosure provides a method for enhancing far-field speech recognition rate.

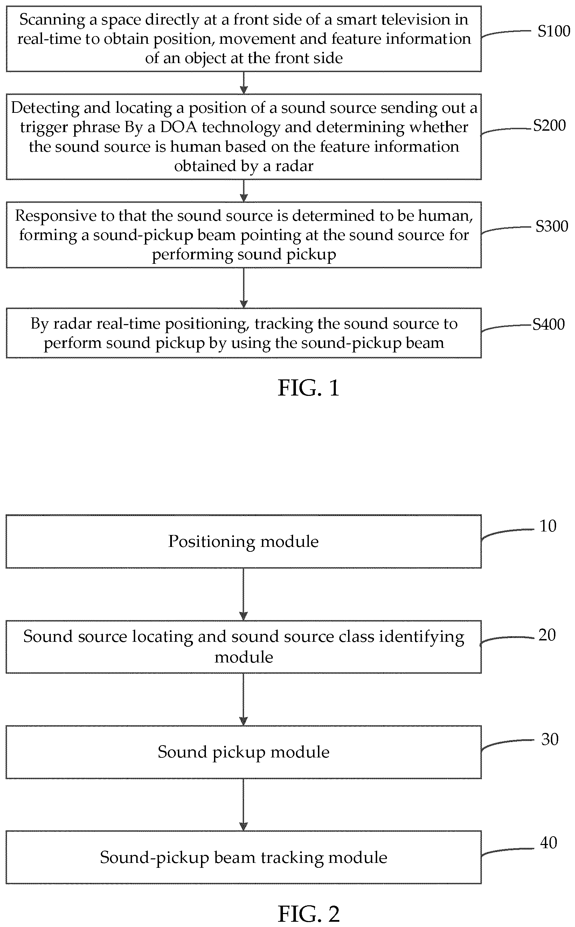

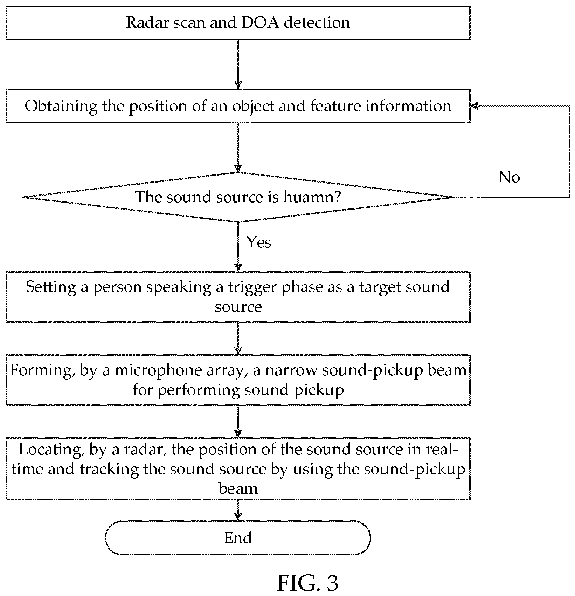

FIG. 1 is a flowchart of a method for enhancing far-field speech recognition rate in accordance with a preferred embodiment of the present disclosure. A more detailed signal processing flow of the present embodiment is referred to FIG. 3, which is a diagram illustrating a signal processing flow of a method for enhancing far-field speech recognition rate in accordance with a preferred embodiment of the present disclosure. The preferred embodiment of the present disclosure includes the following steps.

Step S100: scanning a space directly at a front side of a smart television in real-time to obtain position information, movement information and feature information of an object directly at the front side of the smart television.

Specifically speaking, in the present embodiment, since a lot of people and a plurality of sound sources are often located at a front side of the smart television, a far-field speech recognition system in the present embodiment first employs a radar positioning function to scanning all the objects (including human, animal, audio devices, furniture and etc.) located directly at the front side of the smart television in real-time by means of a radar and employs a fact that different features are possessed for different objects so as to obtain the position information, the movement information and the feature information of all the objects directly at the front side of the smart television, in order to accurately identify the objects located directly at the front side of the smart television. In the present embodiment, the front side of the smart television means a range of 90 degrees (i.e., 45 degrees occupied by each of the left and right sides with respect to a center line of the screen) spanned in the front of a screen of the smart television, assuming that the smart television is taken as a reference object. In identifying or recognizing an object, the accuracy of identification is related to a distance to the object. Accordingly, in other embodiment, it can be utilized that only the objects located within a predetermined distance (e.g., 5 meters) in the front of the screen of the smart television are identified, thereby improving the accuracy of identification. In the present embodiment, a radar is employed to scan and identify all the objects directly at the front side of the smart television. The radar can be directly disposed on the smart television. In such a way, the radar itself can serve as a reference and scan and identify the objects located directly in the front of it. Scanned objects are therefore the objects located at the front side of the smart television. For instance, the radar preset on the smart television is launched. The radar scans in real-time a range of 90 degrees (i.e., 45 degrees occupied by each of the left and right sides with respect to a center line of the screen) spanned in the front of a screen of the smart television, identifies all the objects within 5 meters in the front of the screen, and determines the position information (i.e., the position of a scanned object), the movement information (i.e., whether a movement is made by a scanned object) and the feature information. In the present embodiment, the feature information is used to determine whether the scanned object is human sending out a sound.

In other embodiments, the way to scan the objects at the front side of the smart television is not limited to be achieved by the radar technology, and it can also be achieved based on a Bluetooth technology or an infrared sensing technology. For example, when the infrared sensing technology is involved, the infrared sensing technology is utilized to sense the objects at the front side of the smart television and obtain the position information, the movement information and the feature information of the objects for subsequent analyses.

Step S200: detecting and locating a position of a sound source sending out a trigger phrase and determining, by means of the radar, whether the sound source is human based on the obtained feature information.

Specifically speaking, in the present embodiment, in the case that lots of people are speaking and a plurality of sound sources exist directly at the front side of the smart television, the far-field speech recognition system recognizes a trigger phrase and employs a Direction of Arrival (DOA) technology to detect a direction of the sound source which is the first to send out the trigger phrase and locate the direction of the sound source, thereby realizing accurate positioning of the sound source which is the first to send out the trigger phrase. In the present embodiment, the trigger phrase is used to trigger an acquisition of the position of the object sending out the sound. Specifically, after the objects directly in the front of the smart television are scanned, the sound made by these objects is to be collected or captured. However, because lots of objects may make sounds (i.e., lots of sound sources may exist), the trigger phrase is taken as a reference during the sound capturing in the present embodiment, and only when the trigger phrase is captured, locating the sound source sending out the trigger phrase is performed, that is, locating a target object. In such a way, an object corresponding to a sound source sending out the trigger phrase can be selected from a plurality of sound sources for performing the locating, thereby improving the locating efficiency.

In the present embodiment, when there are a plurality of sound sources sending out the trigger phrase, it needs to detect a direction of the sound source which is the first to send out the trigger phrase such that locating an object corresponding to the sound source which is the first to send out the trigger phrase is realized. In the present embodiment, Direction of Arrival (DOA) technology is employed to detect the direction of the sound source which is the first to send out the trigger phrase so as to locate the direction of the sound source sending out the trigger phrase (i.e., the position information is obtained). In the DOA, distance information and orientation information of a target are obtained by processing the received echo signals. Of course, locating the sound source to obtain its position information is not limited to be achieved by the DOA technology, and it can also be achieved by capturing sound signals by means of a sound sensor so as to obtain the position information of the sound source.

After the direction of the sound source which is the first to send out the trigger phrase is located, it is determined whether the sound source is human based on the feature information obtained through the radar scanning. Specifically, the far-field speech recognition system of the smart television of the present embodiment is configured to be only responsive to human voice and is not responsive to the sound from other objects. That is to say, the present embodiment controls the far-field speech recognition system of the smart television to detect only the human voice sources. In such a way, after the far-field speech recognition system obtains the feature information, which is obtained by the radar scanning, for the located sound source, it can be determined whether the sound source is human, just based on the feature information. If the sound source is not human, find and identify a new sound source again. This excludes irrelevant interfering sources.

Step S300: responsive to that the sound source is determined to be human, forming a sound-pickup beam pointing at the sound source for performing sound pickup.

Specifically speaking, in the present embodiment, if the sound source is human after the identification, the sound source is set as a target sound source.

The far-field speech recognition system utilizes its beam forming function to form a narrow sound-pickup beam pointing at the sound source by means of a microphone array and perform sound pickup on the sound source. The narrow sound-pickup beam can ensure the accuracy of direction the sound-pickup beam points at and reduce interferences from neighboring sound sources. Generally speaking, the narrower the sound-pickup beam, the more the directivity, thereby improving the purity of sound pickup. In the present embodiment, the beam forming comes from the concept of adaptive antenna. Specifically, it can be performed a weighting synthesis on each path of sound signals received by multiple antenna array elements to form desired ideal signals. This is equivalent to forming a beam with a specific pointing direction from the prospect of an antenna pattern. The present embodiment uses the beam forming to form the narrow sound-pickup beam for the target sound source. For example, when the sound source is determined to be human, the smart television employs a beam forming function of the far-field speech recognition system to use the microphone array to form a narrow sound-pickup beam (e.g., with a beam angle being 0.01 radians, that is, about 0.57°) for the target sound source.

Step S400: tracking the sound source to perform the sound pickup by using the sound-pickup beam.

Specifically speaking, in the present embodiment, because of real-time feature of the laser locating, the radar can locate the position of the sound source in real-time and obtain position data of the sound source. The far-field speech recognition system obtains the position data of the sound source by the radar real-time locating, the position data are used for the sound-pickup beam formed by the microphone array to carry out a real-time angle adjustment, and the sound source is closely tracked so as to ensure the stability and reliability of the sound pickup for the sound source, until a control taken by an operator over the smart television is completed or a recognition state is quit. In above step, the position data of the sound source has been obtained, and the position data may then be used for the real-time angle adjustment to be performed on the sound-pickup beam formed by the microphone array so as to realize tracking the sound source. Since the sound source is sent out by human (i.e., a user of the smart television), subsequent operation instructions from the user can be obtained in real-time by the tracking of the sound source. For example, the user sends the operation instructions by voice. In such a way, voice control on the smart television is achieved. For example, when the obtained position data of the sound source indicates that it is sent by a user A with 2 meters distanced from the smart television directly at the front side of the smart television, the sound of the user A is tracked so as to obtain in time a next voice instruction from the user A, thereby increasing the efficiency and accuracy of voice recognition.

The present disclosure further provides a system for enhancing far-field speech recognition rate, for realizing accurate locating a target sound source and efficient sound pickup, reducing interfering with non-target sound sources and greatly improving far-field speech recognition rate in a complicated environment. FIG. 2 is a block diagram illustrating a system for enhancing far-field speech recognition rate in accordance with a preferred embodiment of the present disclosure. The system includes a positioning module 10, a sound source locating and sound source class identifying module 20, a sound pickup module 30 and a sound-pickup beam tracking module 40.

The positioning module 10 is configured for scanning a space directly at a front side of a smart television in real-time to obtain position information, movement information and feature information of an object directly at the front side of the smart television.

Specifically speaking, in the present embodiment, the position information, the movement information and the feature information of all the objects directly at the front side of the smart television are obtained by scanning all the objects directly at the front side of the smart television in real-time by means of a radar positioning function and employing a fact that different features are possessed for different objects.

The sound source locating and sound source class identifying module 20 is configured for detecting and locating a position of a sound source sending out a trigger phrase and determining whether the sound source is human.

Specifically speaking, in the present embodiment, in the case that lots of people are speaking and a plurality of sound sources exist directly at the front side of the smart television, a trigger phrase is recognized and a Direction of Arrival (DOA) technology is employed to detect a direction of the sound source which is the first to send out the trigger phrase to locate the direction of the sound source. The far-field speech recognition system obtains the feature information, which is obtained by the radar scanning, for the located sound source, and determines whether the sound source is human. If the sound source is not human, find and identify a new sound source again.

The sound pickup module 30 is configured for picking up a sound from the sound source.

Specifically speaking, in the present embodiment, if the sound source is identified as human by the sound source locating and sound source class identifying module, the sound source which is the first to send out the trigger phrase is set as a target sound source. The far-field speech recognition system employs a beam forming function to form a narrow sound-pickup beam pointing at the sound source for the target sound source by means of a microphone array and perform sound pickup on the sound source. The narrower the sound-pickup beam, the more the directivity and the more accurate the sound pickup.

The sound-pickup beam tracking module 40 is configured for tracking the sound source in real-time by using a sound-pickup beam, based on obtained real-time radar locating of the sound source.

Specifically speaking, in the present embodiment, the sound source that is set as the target sound source may move during an instruction is given. However, the radar has an ability to obtain the direction of the target in real-time and locate it. In the present embodiment, the radar closely tracts the sound source, and based on real-time locating data of the sound source provided by the radar, the sound-pickup beam tracking module performs an angle adjustment on the sound-pickup beam in real-time to track and pick up the sound of the sound source to achieve a best sound pickup effect until a control over the smart television is completed or a recognition state is quit.

The present disclosure further provides a readable storage medium, which is a computer readable storage medium. The readable storage medium stores a program for enhancing far-field speech recognition rate, which implements, when executed by a processor, the steps of the afore-described method for enhancing far-field speech recognition rate. The detailed working principles are as the same as the afore-described method embodiments and are not repeated herein.

It should be understood that above descriptions are only preferred embodiments of the present disclosure and are not intended to limit the technical solutions of the present disclosure, those of ordinary skill in the art may make additions, substitutions, variations or improvements according to above descriptions within the spirit and principle of the present disclosure, but all the technical solutions with such additions, substitutions, variations or improvements should be within the appended claims.

## Claims

1. A method for enhancing far-field speech recognition rate, comprising the steps of:
scanning a space directly at a front side of a smart television in real-time to obtain position information, movement information and feature information of an object directly at the front side of the smart television;
detecting and locating a position of a sound source sending out a trigger phrase and determining whether the sound source is human based on the obtained feature information;
responsive to that the sound source is determined to be human, forming a sound-pickup beam pointing at the sound source for performing sound pickup; and
tracking the sound source to perform the sound pickup by using the sound-pickup beam.

2. The method for enhancing far-field speech recognition rate according to claim 1, wherein the scanning the space directly at the front side of the smart television in real-time to obtain the position information, the movement information and the feature information of the object directly at the front side of the smart television comprises obtaining the position information, the movement information and the feature information of all the objects directly at the front side of the smart television by scanning all the objects directly at the front side of the smart television in real-time by means of a radar positioning function and employing a fact that different features are possessed for different objects.

3. The method for enhancing far-field speech recognition rate according to claim 1, wherein the detecting and locating the position of the sound source sending out the trigger phrase and the determining whether the sound source is human based on the obtained feature information comprise the steps of:
responsive to that a plurality of sound sources exist directly at the front side of the smart television, by means of Direction of Arrival (DOA), detecting a direction of the sound source which is the first to send out the trigger phrase;
locating the position of the sound source of the trigger phrase; and
determining whether the located sound source is human based on the feature information obtained by a radar; if not, performing the detecting and determining once again.

4. The method for enhancing far-field speech recognition rate according to claim 3, wherein responsive to that the plurality of sound sources exist directly at the front side of the smart television, by means of Direction of Arrival (DOA), detecting the direction of the sound source which is the first to send out the trigger phrase comprises:
controlling a far-field speech recognition system in the smart television to detect human voice sources only.

5. The method for enhancing far-field speech recognition rate according to claim 3, wherein responsive to that the sound source is determined to be human, the forming the sound-pickup beam pointing at the sound source for performing sound pickup comprises the steps of:
responsive to that the sound source is determined to be human, setting the sound source which is the first to send out the trigger phrase, as a target sound source; and
employing, by a smart television system, a beam forming function to form a sound-pickup beam pointing at the target sound source by means of a microphone array and performing sound pickup on the sound source.

6. The method for enhancing far-field speech recognition rate according to claim 5, wherein the sound-pickup beam pointing at the sound source is a narrow sound-pickup beam, which is employed for making the pointing of the sound-pickup beam accurate.

7. The method for enhancing far-field speech recognition rate according to claim 5, wherein the tracking the sound source to perform the sound pickup by using the sound-pickup beam comprises the step of:
locating the position of the sound source in real-time by the radar to obtain position data of the sound source; and
performing an angle adjustment on the sound-pickup beam in real-time based on the obtained position data until a control over the smart television is completed or a recognition state is quit.

8. A system for enhancing far-field speech recognition rate, comprising a positioning module, a sound source locating and sound source class identifying module, a sound pickup module and a sound-pickup beam tracking module;
the positioning module configured for scanning a space directly at a front side of a smart television in real-time to obtain position information, movement information and feature information of an object directly at the front side of the smart television;
the sound source locating and sound source class identifying module configured for detecting and locating a position of a sound source sending out a trigger phrase and determining whether the sound source is human;
the sound pickup module configured for picking up a sound from the sound source;
the sound-pickup beam tracking module configured for tracking the sound source by using a sound-pickup beam, based on obtained real-time locating of the sound source.

9. The system for enhancing far-field speech recognition rate according to claim 8, wherein the positioning module obtains the position information, the movement information and the feature information of all the objects directly at the front side of the smart television by scanning all the objects directly at the front side of the smart television in real-time by means of a radar positioning function and employing a fact that different features are possessed for different objects.

10. The system for enhancing far-field speech recognition rate according to claim 8, wherein the sound source locating and sound source class identifying module is configured for detecting and locating the position of the sound source sending out the trigger phrase and determining whether the sound source is human, and responsive to that a plurality of sound sources exist directly at the front side of the smart television, by recognizing the trigger phrase and by means of Direction of Arrival (DOA), detecting a direction of the sound source which is the first to send out the trigger phrase to locate the position of the sound source, and the smart television determines whether the located sound source is human based on the feature information obtained by radar scanning; if not, the detecting and determining is performed once again.

11. The system for enhancing far-field speech recognition rate according to claim 10, wherein the sound source locating and sound source class identifying module is further configured for controlling a far-field speech recognition system in the smart television to detect human voice sources only.

12. The system for far-field speech recognition rate according to claim 8, wherein the sound pickup module is configured for picking up the sound of the sound source, if the sound source is identified as human by the sound source locating and sound source class identifying module, the sound source which is the first to send out the trigger phrase is set as a target sound source, and a smart television system employs a beam forming function to form a sound-pickup beam pointing at the target sound source by means of a microphone array and perform sound pickup on the sound source.

13. The system for enhancing far-field speech recognition rate according to claim 12, wherein the sound-pickup beam pointing at the sound source is a narrow sound-pickup beam, which is employed for making the pointing of the sound-pickup beam accurate.

14. The system for enhancing far-field speech recognition rate according to claim 8, wherein the sound-pickup beam tracking module is configured for tracking the sound source by using the sound-pickup beam, based on real-time locating of the sound source obtained by a radar, and performing an angle adjustment on the sound-pickup beam in real-time to track and pick up the sound of the sound source until a control over the smart television is completed or a recognition state is quit.

15. A readable storage medium, storing a computer program for enhancing far-field speech recognition rate, wherein when executed by a processor, the computer program for enhancing far-field speech recognition rate implements the steps of the method for enhancing far-field speech recognition rate according to any of claims 1 to 7.
